# EUROPEAN PATENT SPECIFICATION

(11) **EP 2 881 600 B1**
(45) Date of publication and mention of the grant of the patent: **17.04.2019**
(21) Application number: 13824809.1
(22) Date of filing: 16.07.2013
(51) Int. Cl.: F16B 19/10, F16B 5/06, F16B 21/06

(54) **FIXTURE**
BEFESTIGUNG
ENSEMBLE

(30) Priority: 30.07.2012 JP 2012168820
(43) Date of publication of application: 10.06.2015
(73) Proprietor: Newfrey LLC, New Britain, CT 06053 (US); Nippon Pop Rivets And Fasteners Ltd., Tokyo 102-0094 (JP)
(72) Inventor: YAMAMOTO Kazuhito, Toyota-shi Aichi 471-8571 (JP); AOSHIMA Yuuki, Toyohashi-shi Aichi 441-8540 (JP)
(74) Representative: Haar, Lucas Heinz Jörn
(86) International application number: PCT/JP2013/069323
(87) International publication number: WO 2014/021098

(56) References cited:
- JP-A- 2006 161 890
- JP-A- 2006 161 890
- JP-A- 2008 020 006
- JP-A- 2008 020 006
- JP-A- 2010 144 900

## Description

### Technical Field

The invention relates to a fixture and in particular, a fixture which can fasten an attaching member to a mounting member with relatively little force.

### Background Art

As a fixture in prior art, JP 2006 161890 A discloses an airbag mounting member as an attaching member and a clip that is mounted on the body panel as a mounting member. This clip comprises a bushing that receives a pin and includes a flange and a leg part extending from the flange; the leg part is constructed by disposing two elastic locking pieces that protrude elastically outwards to the leg part side of the bushing flange and sandwiching both elements with said elastic locking pieces and the flange of the bushing. A shaft hole that receives the pin is disposed on the leg part and the elastic locking piece is stopped so that, if the pin is inserted into the shaft hole, bending towards the inside of the shaft hole is obstructed and, if the pin is not in the shaft hole, it becomes temporarily fixed, which allows bending to the inside of the shaft hole.

JP 2010-144900 A also discloses a similar example of a fixture that uses four elastic locking pieces. This fixture has an axis post inside the shaft part (leg part), on which axis post several shaft holes are disposed. Then, several leg parts (shaft parts) are inserted into these shaft holes. Also, the leg part (shaft part) of the bushing connects to the back of the flange of the bushing and an opening is disposed to form elastic locking pieces in one part of the shaft part (leg part) in which an elastic locking piece is disposed; this opening reaches from the shaft part (leg part) of the bushing to the back of the flange,

A fixing tool disclosed in JP2008 020006 A comprises two components, a pin having a head portion and a leg portion extending from the head portion, and a bush having a flange and a shaft portion extending from the flange. The shaft portion is provided with a space receiving the leg portion, and the fixing tool is fixed to a mounting member by inserting the leg portion into the space. The shaft portion is provided with an elastic locking piece holding the mounting member in cooperation with the flange. An axially-extended shaft pole of cruciform cross section and high rigidity is formed on the center of the shaft portion.

### Summary of the Invention

### Problems to be solved by the Invention

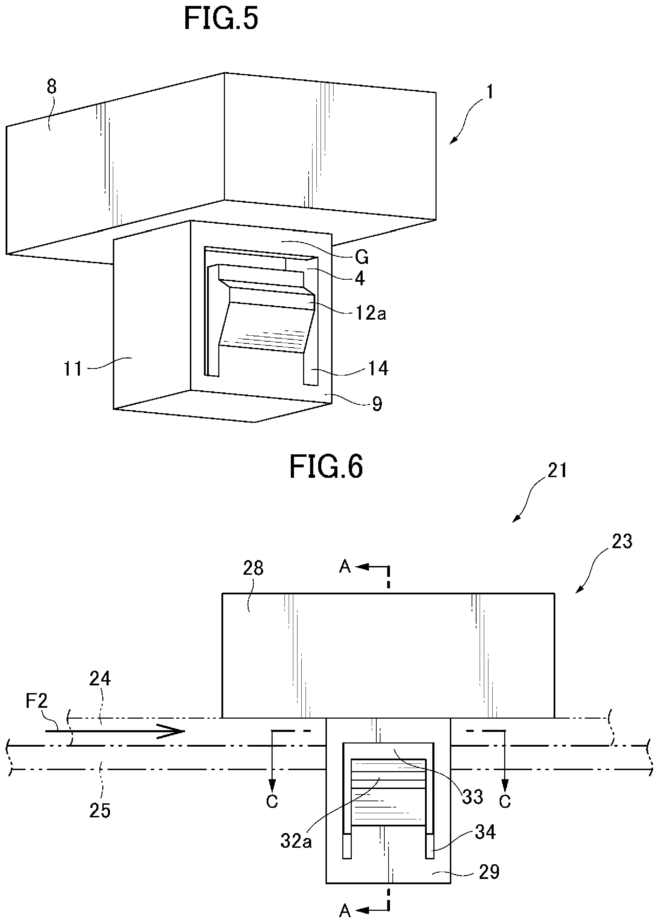

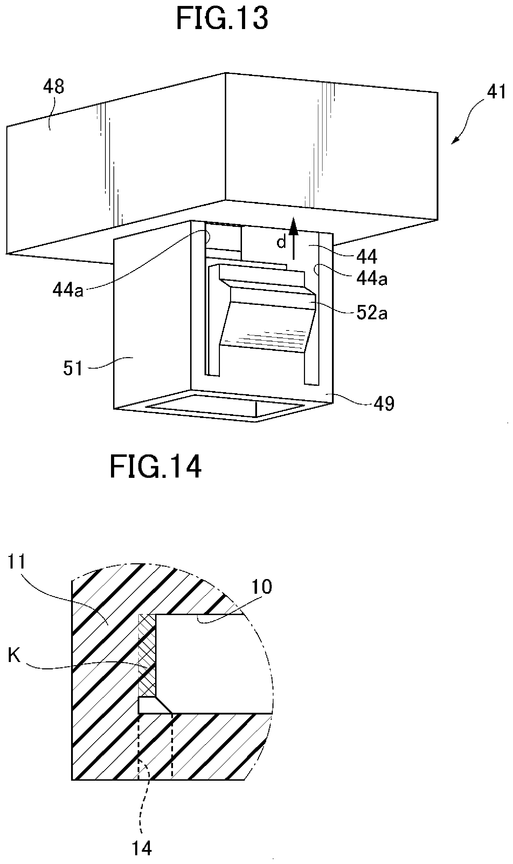

The problem of the fixture of Patent Reference 1, as shown in Figures 6 to 8, is that the tolerance to shear stress is weak because a columnar construction is not disposed inside the leg part of the bushing. Also, in the fixture of Patent Reference 2, a strong tolerance to vertical stress and shear stress was obtained by using 4 elastic locking pieces; however, there is a problem, as shown in Fig. 13, in that a strong tolerance to input (torsional input) from one side onto the back of the flange was not obtained because the opening for forming the elastic locking piece reaches from the shaft part (leg part) to the back of the flange.

The object of the invention is to provide a fixture which has a strong tolerance to vertical stress, shear stress and torsional stress.

### Means for Solving the Problems

According to the invention, a fixture is provided, characterized in that it comprises a pin and a bushing, and after temporarily fixing the bushing to an attaching member and a mounting member, then inserting the pin into the bushing, it connects the attaching member to the mounting member; the pin includes head part and a shaft part extending from the head part; the bushing includes a flange and a leg part extending from the flange; the leg part has shaft-part receiving openings that receive the shaft part of the pin, outer walls that surround the shaft-part receiving openings, a pair of opposing elastic engagement claws disposed on a portion of the outer walls and a leg center column disposed in the center of the shaft-part receiving openings; a connecting part of the leg part with the flange is completely covered by the outer wall; and the leg center column connects opposing outer wall portions with each other which are perpendicular to the outer wall portions where the elastic engagement claws are disposed.

According to one characteristic of the invention, the end point of the side opposite the flange connecting part of the leg part has a closed end construction in order to close off the shaft-part receiving opening.

According to another characteristic of the invention, the leg part is constructed as outer walls having a square cross-section; the pair of elastic engagement claws are disposed on a pair of opposing outer wall portions; and the leg center column connects the other pair of opposing outer wall portions with each other which are perpendicular to the pair of opposing outer wall portions.

According to another characteristic of the invention, the shaft-part receiving openings of the leg part comprise a pair of spaces divided into parts by the leg center column and the shaft parts of the pin are separated by a bifurcation in order to be received into the spaces.

According to another characteristic of the invention, the elastic engagement claws protrude elastically outward from the outer walls; when temporarily fixed, the elastic engagement claws return elastically to protrude outward after bending temporarily inward in order to pass through the mounting holes of the attaching member and the mounting member and, when stopping, they are constructed so that bending inward is obstructed by the shaft parts inserted into the shaft-part receiving openings.

According to another characteristic of the invention, the leg center column, when temporarily fixed, is constructed so that it forms enough space between the outer walls for the elastic claws to bend inward.

According to another characteristic of the invention, the cross-sectional area of the leg part is made to increase by extending towards the shaft-part receiving openings so that the inner walls of the other pair of outer wall portions approach each other.

According to the fixture of the invention, the connecting part of the leg part of the bushing with the flange is covered completely by the outer wall of the leg part; the leg center column is disposed in the center of the shaft-part receiving opening; and the leg center column connects the other pair of opposing outer wall portions with each other which are perpendicular to the pair of opposing outer wall portions where the elastic engagement claws are disposed. Accordingly, a fixture with strong tolerance to vertical stress, shear stress and torsional stress is obtained.

### Brief Description of the Drawings

- [Fig. 1]: Figure 1 is a front view of one embodiment of the invention.
- [Fig. 2]: Figure 2 is a cross-section view at the B-B arrow showing the situation before the fastening of the fixture of Fig. 1.
- [Fig. 3]: Figure 3 is a cross-section view at the B-B arrow showing the situation after the fastening of the fixture of Fig. 1.
- [Fig. 4]: Figure 4 is an enlarged cross-section view at the D-D arrow of Fig. 1.
- [Fig. 5]: Figure 5 is an outline oblique view showing one part of the fixture of Fig. 1.
- [Fig. 6]: Figure 6 is a front view similar to Fig. 1 showing one example of the fixture of prior art.
- [Fig. 7]: Figure 7 is a cross-section view at the A-A arrow showing the situation before the fastening of the fixture of Fig. 6.
- [Fig. 8]: Figure 8 is a cross-section view at the A-A arrow showing the situation after the fastening of the fixture of Fig. 6.
- [Fig. 9]: Figure 9 is an enlarged cross-section view at the C-C arrow of Fig. 6.
- [Fig. 10]: Figure 10 is a similar drawing to Fig. 6 to illustrate shear stress.
- [Fig. 11]: Figure 11 is a similar drawing to Fig. 9 to illustrate the shear stress on the fixture of prior art.
- [Fig. 12]: Figure 12 is a similar drawing to Fig. 4 to illustrate the shear stress on the fixture of the invention.
- [Fig. 13]: Figure 13 is an outline oblique view similar to Fig. 5 showing another example of the fixture of prior art.
- [Fig. 14]: Figure 14 is an enlargement of a part of the part E of Fig. 12.
- [Fig. 15]: Figure 15 is a partial see-through oblique view of Fig. 6 to illustrate the tolerance of the fixture of prior art when it receives a vertical stress.
- [Fig. 16]: Figure 16 is a partial see-through oblique view of Fig. 1 to illustrate the tolerance of the fixture of prior art when it receives a vertical stress.

### Embodiment of the Invention

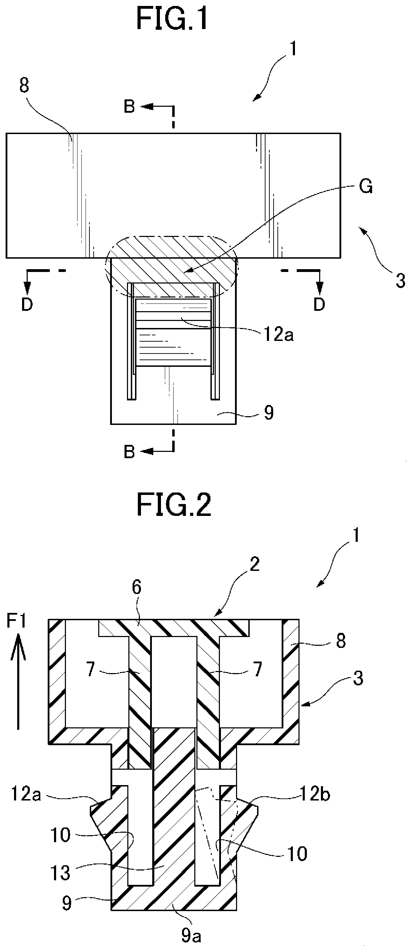

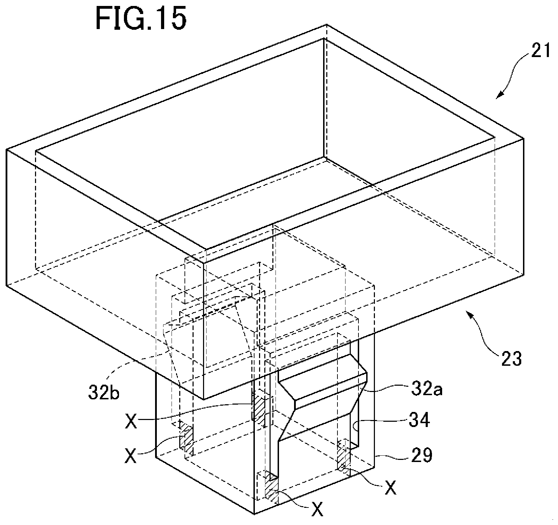

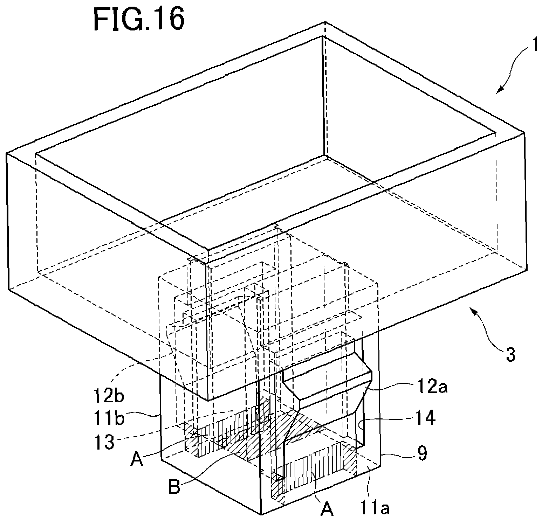

Below we shall describe an embodiment of the invention based on the drawings. Figs. 1 to 5 and Fig. 14 show a fixture according to a working example of the invention; Figs. 6 to 9 and Fig. 13 show an example of a fixture of prior art to clarify the difference of construction with the fixture of the invention shown in Figs. 1 to 5; and Figs. 10 to 12 show a similar drawing to Figs 6, 9 and 4 to illustrate shear stress. Also, Figs. 15 and 16 show a partial see-through oblique view of the fixture of prior art and the fixture of the invention, respectively, to illustrate tolerance when they receive a vertical stress.

As shown in Figs. 1 to 5, the fixture of the invention 1 comprises a pin 2 and bushing 3. In this fixture 1, similar to the fixture 21 of prior art shown in Fig. 6, after temporarily fixing the bushing to the attaching member 24 and the mounting member 25, the attaching member 24 is fastened to the mounting member 25 by locking when the pin 2 is inserted into the bushing 3.

The pin 2 comprises a head part 6 and a shaft part 7 that extends from the head part and the bushing 3 comprises a flange 8 and a leg part 9 that extends from the flange 8. The leg part 9 has shaft-part receiving openings 10 that receive the shaft part 7 of the pin 2 and these shaft-part receiving openings 10 are enclosed by an outer wall 11 having a rectangular cross section. A pair of opposing elastic engagement claws 12a, 12b are disposed on a pair of opposing wall portions 11a, 11b of a portion of the outer wall 11.

This construction is also similar to the fixture 21 of prior art shown in Figs. 6 to 9. That is, the fixture 21 of prior art comprises a pin 22 and a bushing 23. In this fixture 21, after temporarily fixing the bushing 23 to the attaching member 24 and the mounting member 25, the attaching member 24 is fastened to the mounting member 25 by locking when the pin 22 is inserted into the bushing 23. Also the pin 23 comprises a head part 26 and a shaft part 27 that extends from the head part 26 and the bushing 23 comprises a flange 28 and a leg part 29 that extends from the flange 28. The leg part 29 has shaft-part receiving opening 30 that receives the shaft part 27 of the pin 22 and this shaft-part receiving opening 30 is enclosed by an outer wall 31 having a rectangular cross section. A pair of opposing elastic engagement claws 32a, 32b are disposed on a pair of opposing wall portions 31a, 31b of a portion of the outer wall 31.

The elastic engagement claws 12a, 12b of the fixture 1 of the invention, similar to the elastic engagement claws 32a, 32b of the fixture 21 of prior art, elastically protrude outward from the outer wall 11; the elastic engagement claws 12a, 12b, when temporarily fixed, return elastically to protrude outward after bending temporarily inward in order to pass through the mounting holes of the attaching member and the mounting member, and, when stopping, they are constructed so that bending inward is obstructed by the shaft parts inserted into the shaft-part receiving openings 10.

Next, the fixture 1 of the invention will be described regarding the differences between it and the fixture 21 of prior art shown in Figs. 6 to 9 and another fixture 41 of prior art shown in Fig. 13.

The fixture 1 of the invention is different from the fixture 21 of prior art shown in Figs. 6 to 9 in that the leg center column 13 is disposed in the center of the shaft-part receiving openings 10. This leg center column 13 connects another pair of opposing outer wall portions 11c, 11d with each other which are perpendicular to the pair of opposing outer wall portions 11a, 11b, where a pair of opposing elastic engagement claws 12a, 12b are disposed. The leg center column 13, as shown in Fig. 2, is constructed such that, when temporarily fixed, it forms a sufficient space between the outer wall 11 in order for the elastic engagement claws 12a, 12b to bend inward. The imaginary line shows the situation in which the elastic engagement claw 12b is bent inward.

Also, the fixture 1 of the invention differs from the fixture 41 of prior art shown in Fig. 13 in that the connecting part G of the leg part 9 with the flange 8 (cf. Figs. 1 to 5) is completely covered by the outer wall 11. In this connection, in the fixture 41 of prior art shown in Fig. 13, the opening 44 disposed to form the elastic engagement claw 52a, different from the opening 4 of the fixture 1 of the invention, reaches from the leg part 49 to the back surface of the flange 48, and the connecting part of the leg part 49 with the flange 48 which is above the elastic engagement claw 52a is not covered by the outer wall 51.

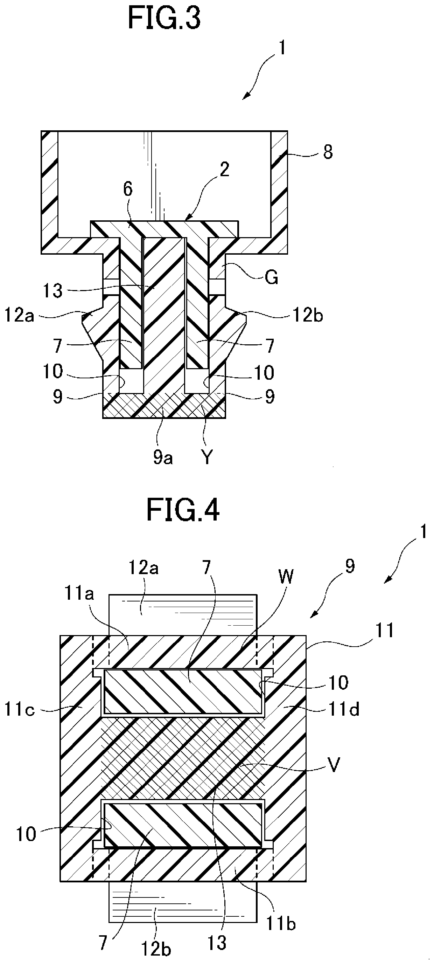

Furthermore, the fixture 1 of the invention, as shown in Figs. 4 and 12 to 14, differs from the fixture of 21 of prior art in that it is constructed so that the side cross sectional area of the leg part 9 is made to increase by extending towards the shaft-part receiving openings 10 in order that they approach the inner walls of the pair of outer wall portions 11c, 11d.

Since the leg center column 13 is disposed in the center of the shaft-part receiving openings 10 on the fixture 1 of the invention, the shaft-part receiving openings 10 comprise a pair of spaces divided by the leg center column 13 and the shaft parts 7 of the pin 2 are separated by a bifurcation in order to be received into the spaces.

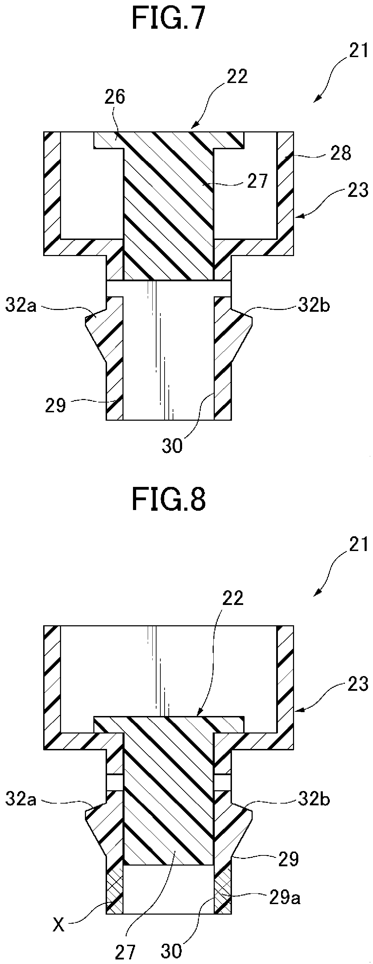

Furthermore, the fixture 1 of the invention is different from the fixture 21 of prior art shown in Figs. 6 to 9 in that the end part 9a opposite the flange connecting part G of the leg part 9 has a closed end construction in order to close off the shaft-part receiving openings 10.
In this connection, the end part 29a of the leg part 29 of the fixture 21 of prior art has an open end construction as shown in Figs. 7 and 8.

Next, we shall describe the differences in tolerance to vertical stress, shear stress and torsional stress between the fixture 1 of the invention and the fixtures 21 and 41 of prior art.

First, as to describing vertical stress, when there is a vertical force applied to the leg part 9 perpendicular to the flange, as shown by the arrow F1 in Fig. 2, this vertical stress is received by the connecting part G of the leg part 9 with the flange 8 and by the end part 9a of the leg part 9.

As shown in Figs. 4 to 9, in the fixture 1 of the invention, the cross section of the flange connecting part of the leg part 9 that receives vertical stress F1 becomes larger in comparison with the fixture 21 of prior art. That is to say, in the construction of the fixture 21 of prior art vertical stress F1 is received by the pull of the cross section Z. In contrast to this, in the construction of the fixture 1 of the invention, the cross section W receives the vertical stress F1. This cross section W has the cross section of the leg center column V added to the cross section Z. So, according to the invention, the tolerance to vertical stress F1 is greater in comparison to the fixture 21 of prior art, because the cross-sectional area of the connecting part of the leg part is enlarged.

Also, as shown in Figs. 3 to 8, the vertical stress on the end part of the leg part is received by the cross section X in the construction of the fixture 21 of prior art but it is received by the cross section Y in the construction of the invention. Because the end part 9a of the fixture 1 of the invention is a closed end, the cross sectional area of the cross section Y is enlarged more than the cross-sectional area of the cross section X and, subsequently, the tolerance to the vertical stress F1 is greater.

We shall describe this in more detail referring to Figs. 15 and 16. When the fixture receives vertical stress F1, the bushing receives the vertical stress F1 partly as a shear stress and partly as a pull force. In the fixture 1 of the invention and the fixture of prior art 21, from the difference in construction, the bushing 23 of the fixture 21 of prior art only receives shear stress, but the bushing 3 of the fixture 1 of the invention receives shear stress and pull force. The location at which the bushing 23 of the fixture 21 of prior art receives the shear stress, as shown in Fig. 15, is on 4 points of the cross section X on the base point of the engagement claw outer slit 34 of the leg part 34. As shown in Figs. 6 to 10, the opening 33 for forming an elastic engagement side constructs the engagement claw outer slit 34. In contrast to this, the location at which the bushing 3 of the fixture 1 of the invention receives shear stress, in addition to the cross section X of the bushing 23 of the fixture 21 of prior art, is on 2 points of the cross section A of the inner wall of the outer wall portions 11a, 11b of the leg part 9 which are opposite to the leg center column 13. Also, the cross section where the bushing 3 of the fixture 1 of the invention receives pull force is the cross section B of the leg center column 13 corresponding to the cross section V of Fig. 4.

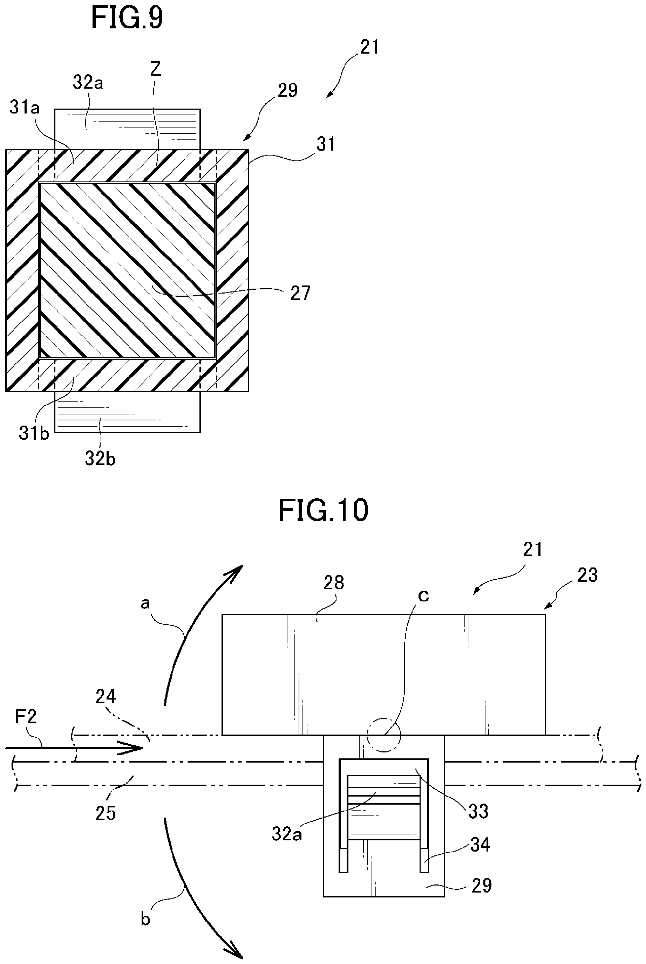

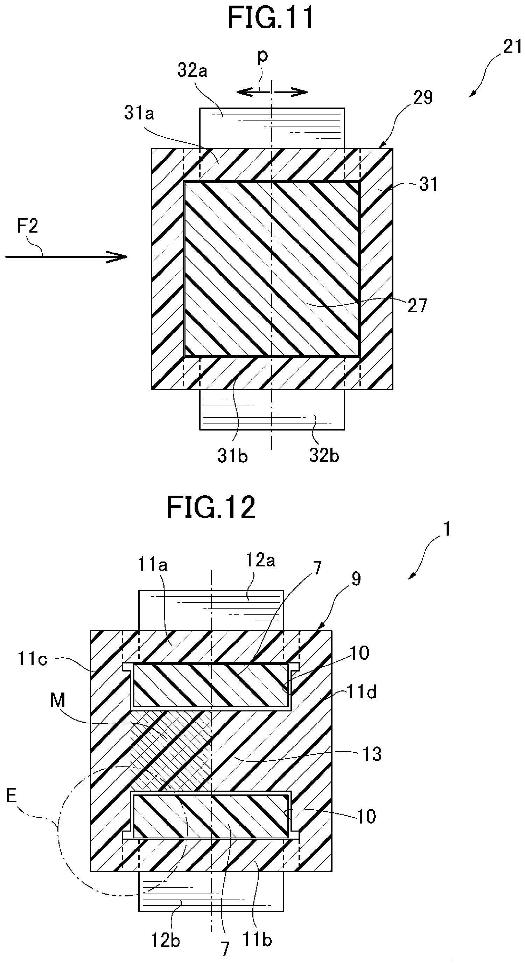

Next, we shall describe the shear stress. The shear stress enters the connecting part of the leg part 29 with the flange as shown by arrow F in Fig. 10. When the shear stress enters, with the center c on the cross section of the connecting part, the force works in a rotational direction as shown by arrows a, b, and it becomes stress towards the pull direction a, b. At that time, the leg part resists left half pull and right half pressure from the rotational center c as shown by arrow p in Fig. 11. In the fixture 1 of the invention, as shown in Fig. 12, with the addition of the leg center column 13, the cross section M part is enlarged in contrast to the cross section of the left half and the right half, respectively, in the construction of prior art in Fig. 11. Thus, the tolerance to shear force is greater in the fixture 1 of the invention.

Furthermore, the fixture 1 of the invention, as shown in Figs. 4 to 12, is constructed so that the cross-sectional area of the leg part 9 is made to increase by extending towards the shaft-part receiving openings 10 so that the inner walls of the pair of outer wall portions 11c, 11d approach each other. Accordingly, as shown in Fig. 14, only the area of part of the cross section K increases compared to the outer wall 31 of the fixture 21 of prior art. Generally, the leg part 9, which has engagement claws 12a, 12b, is constructed by making one part from combining a normal metal die forming the leg part and the metal die (i.e., slide metal die) forming the slit 14 around the engagement claw. Thus, by changing the coupled part of this slide metal die and the normal metal die forming the leg part, the position of the slit 14 around the engagement claw is able to change. Therefore, the position of the slit 14 around the engagement claw is disposed more towards the center of the shaft-part receiving openings 10 than in prior art, so the thickness of the outer wall portions 11c, 11d can become greater. Accordingly, the cross section area of the leg part of the fixture 1 of the invention, for each outer wall part, increases only at part of the cross section K in comparison to the cross sectional area of the leg part of the fixture 21 of prior art.

Next, we shall describe the torsional stress. Fig. 5 is a partial outline oblique view of the fixture 1 of the invention, and only the bottom of the flange 8 and the leg part 9 are shown in Fig. 5. Fig. 13 is a similar outline oblique view of the fixture 41 of prior art. Torsional stress is the force added by one side onto the back of the flange 48 as shown by arrow d in Fig. 13; with the construction in which the openings 44 disposed to form an elastic engagement claw 52a reach from the leg part 49 to the back of the flange 48, as in this fixture 41, when this force is added, the stress on the ridge line 44a of the opening 44 becomes concentrated and the leg part 49 is destroyed.

On the other hand, in the fixture 1 of the invention, such an opening 4 does not extend from the leg part 9 to the back of the flange 8, but the connecting part G of the leg part 9 with the flange 8 which is above the elastic engagement claw 12a is covered by the outer wall 11. Thus, the fixture 1 of the invention has a tolerance to torsional stress. Also, as shown in Fig. 5, the opening 4 constitutes a slit 14 around the engagement claw.

### Explanation of Reference Numerals

- 1, 21, 41: Fixture
- 2, 22: Pin
- 3, 23: Bushing
- 4, 33, 44: Opening
- 6, 26: Head part
- 7, 27: Shaft part
- 8, 28: Flange
- 9, 29: Leg part
- 9a: End part of the leg part
- 10, 30: Shaft-part receiving openings
- 11, 31: Outer wall
- 11a, 11b, 11c, 11d: Outer wall portions
- 12a, 12b, 32a, 32b, 52a: Elastic engagement claws
- 13: Leg center column
- 14, 34: Slits around elastic engagement claws
- 24: Attaching member
- 25: Mounting member
- A, B, K, M, V, W, X, Y, Z: Cross-sections
- G: Flange connecting part of the leg part

## Claims

1. A fixture (1) **characterized in that** it comprises a pin (2) and a bushing (3), and after temporarily fixing the bushing (3) to an attaching member (24) and a mounting member (25), then inserting the pin into the bushing (3), it connects the attaching member (24) to the mounting member (25); the pin (2) includes head part (6) and a shaft part (7) extending from the head part (6); the bushing (3) includes a flange (8) and a leg part (9) extending from the flange (8); the leg part (9) has shaft-part receiving openings (10) that receive the shaft part (7) of the pin (2), outer walls (11) that surround the shaft-part receiving openings (10), a pair of opposing elastic engagement claws (12a, 12b) disposed on a portion (11a, 11b) of the outer walls (11), and a leg center column (13) disposed in the center of the shaft-part receiving openings (10); a connecting part (G) of the leg part (9) with the flange (8) is completely covered by the outer wall (11); and the leg center column (13) connects opposing outer wall portions (11c, 11d) with each other which are perpendicular to the outer wall portions (11a, 11b) where the elastic engagement claws (12a, 12b) are disposed.

2. The fixture of Claim 1, **characterized in that** the end part (9a) of the side opposite the flange connecting part (G) of the leg part (9) has a closed end construction in order to close off the shaft-part receiving opening (10).

3. The fixture of Claim 1 or Claim 2, **characterized in that** the leg part (9) is constructed as outer walls (11) having a square cross-section; the pair of elastic engagement claws (12a, 12b) are disposed on a pair of opposing outer wall portions (11a, 11b); and the leg center column (13) connects the other pair of opposing outer wall portions (11c, 11d) with each other which are perpendicular to the pair of opposing outer wall portions (11a, 11b).

4. The fixture of any one of Claims 1 to 3, **characterized in that** the shaft-part receiving openings (10) of the leg part (9) comprise a pair of spaces divided into parts by the leg center column (13), and the shaft parts (7) of the pin (2) are separated by a bifurcation in order to be received into the spaces.

5. The fixture of any one of Claims 1 to 4, **characterized in that** the elastic engagement claws (12a, 12b) protrude elastically outward from the outer walls; when temporarily fixed, the elastic engagement claws (12a, 12b) return elastically to protrude outward after bending temporarily inward in order to pass through the mounting holes of the attaching member (24) and the mounting member (25) and, when locking, they are constructed so that bending inward is obstructed by the shaft parts (7) inserted into the shaft-part receiving openings (10).

6. The fixture of any one of Claims 1 to 5 **characterized in that** the leg center column (13), when temporarily fixed, is constructed so that it forms enough space between the outer walls (11) for the elastic claws (12a, 12b) to bend inward.

7. The fixture of any one of Claims 3 to 6 **characterized in that** the cross-sectional area of the leg part (9) is made to increase towards the shaft-part receiving openings (10) so that the inner walls (11) of the other pair of outer wall portions (11c, 11d) approach each other.

## Patentansprüche

1. Eine Befestigungsvorrichtung (1), die **dadurch gekennzeichnet ist, dass** sie einen Steckstift (2) und eine Buchse (3) umfasst, und dass, nach vorübergehender Fixierung der Buchse (3) an einem Anbauelement (24) und einem Befestigungselement (25) und anschließendem Einführen des Steckstiftes in die Buchse (3), sie das Anbauelement (24) mit dem Befestigungselement (25) verbindet; der Steckstift (2) umfasst ein Kopfstück (6) und ein sich von dem Kopfstück erstreckendes Schaftstück (7); die Buchse (3) umfasst einen Flansch (8) und ein sich von dem Flansch erstreckendes Schenkelstück (9); das Schaftstück (9) weist Schaftstückaufnahmeöffnungen (10), die das Schaftstück (7) des Steckstiftes (2) aufnehmen, Außenwände (11), die die Schaftstückaufnahmeöffnung (10) umgeben, ein Paar gegenüberliegende elastischer Eingriffskrallen (12a, 12b), die an einem Abschnitt (11a, 11b) der Außenwände (11) angeordnet sind, und eine Schenkelmittelsäule (13), die in der Mitte der Schaftstückaufnahmeöffnungen (10) angeordnet ist, auf; ein Verbindungsstück (G) des Schenkelstücks (9) mit dem Flansch (8) ist komplett von der Außenwand (11) bedeckt; und die Schenkelmittelsäule (13) verbindet gegenüberliegende Außenwandabschnitte (11c, 11d) miteinander, die senkrecht sind zu den Außenwandabschnitten (11a, 11b), an denen die elastischen Eingriffskrallen (12a, 12b) angeordnet sind.

2. Die Befestigungsvorrichtung gemäß Anspruch 1, **dadurch gekennzeichnet, dass** das Endstück (9a) der Seite gegenüber des Flanschverbindungsstücks (G) des Schenkelstücks (9) eine Konstruktion mit geschlossenem Ende hat, um die Schaftstückaufnahmeöffnungen (10) abzuschließen.

3. Die Befestigungsvorrichtung gemäß Anspruch 1 oder Anspruch 2, **dadurch gekennzeichnet, dass** das Schenkelstück (9) ausgebildet ist mit Außenwänden (11), die einen quadratischen Querschnitt haben; das Paar an elastischen Eingriffskrallen (12a, 12b) ist angeordnet an einem Paar gegenüberliegender Außenwandabschnitte (11a, 11b); und die Schenkelmittelsäule (13) verbindet das andere Paar an gegenüberliegenden Außenwandabschnitten (11c, 11d) miteinander, die senkrecht zu dem Paar an gegenüberliegenden Außenwandabschnitten (11a, 11b) sind.

4. Die Befestigungsvorrichtung gemäß einem der Ansprüche 1 bis 3, **dadurch gekennzeichnet, dass** die Schaftstückaufnahmeöffnungen (10) des Schenkelstücks (9) ein Paar an Räumen umfassen, die durch die Schenkelmittelsäule (13) gegliedert sind, und dass die Schaftstücke (7) des Steckstiftes (2) durch eine Verzweigung getrennt sind, um in den Räumen aufgenommen werden zu können.

5. Eine Befestigungsvorrichtung gemäß einem der Ansprüche 1 bis 4, **dadurch gekennzeichnet, dass** die elastischen Eingriffskrallen (12a, 12b) von den Außenwänden elastisch nach außen vorstehen; wenn sie vorübergehend fixiert sind kehren die elastischen Eingriffskrallen (12a, 12b) elastisch zurück, um nach außen vorzustehen, nachdem sie vorübergehend einwärts gebogen wurden, um die Befestigungsöffnungen des Anbauelements (24) und des Befestigungselements (25) zu passieren, wobei sie derart konstruiert sind, dass, zum Verriegeln, Einwärtsbiegen mittels der in die Schaftstückaufnahmeöffnungen (10) eingeführten Schaftstücke verhindert wird.

6. Die Befestigungsvorrichtung gemäß einem der Ansprüche 1 bis 5, **dadurch gekennzeichnet, dass** die Schenkelmittelsäule (13) derart konstruiert ist, dass sie genug Raum zwischen den Außenwänden (11) für die elastischen Krallen (12a, 12b), wenn temporär fixiert, zum Einwärtsbiegen ausbildet.

7. Die Befestigungsvorrichtung gemäß einem der Ansprüche 3 bis 6, **dadurch gekennzeichnet, dass** die Querschnittsfläche des Schenkelstücks (9) sich in Richtung der Schaftstückaufnahmeöffnungen (10) hin vergrößert, so dass die Innenwände (11) des anderen Paars von Außenwandabschnitten (11c, 11d) sich einander annähern.

## Revendications

1. Accessoire fixe (1) **caractérisé en ce qu'**il comprend une goupille (2) et une douille (3), et après fixation temporaire de la douille (3) à un organe d'attache (24) et à un organe de montage (25), puis insertion de la goupille dans la douille (3), il raccorde l'organe d'attache (24) à l'organe de montage (25) ; la goupille (2) comporte une partie de tête (6) et une partie de tige (7) s'étendant depuis la partie de tête (6) ; la douille (3) comporte une bride (8) et une partie de patte (9) s'étendant depuis la bride (8) ; la partie de patte (9) a des ouvertures de réception de partie de tige (10) qui reçoivent la partie de tige (7) de la goupille (2), des parois extérieures (11) qui entourent les ouvertures de réception de partie de tige (10), une paire de griffes d'enclenchement élastiques opposées (12a, 12b) disposées sur une portion (11a, 11b) des parois extérieures (11), et une colonne centrale de patte (13) disposée au centre des ouvertures de réception de partie de tige (10) ; une partie de raccordement (G) de la partie de patte (9) avec la bride (8) est totalement couverte par la paroi extérieure (11) ; et la colonne centrale de patte (13) raccorde des portions de paroi extérieure opposées (11c, 11d) les unes aux autres qui sont perpendiculaires aux portions de paroi extérieure (11a, 11b) où sont disposées les griffes d'enclenchement élastiques (12a, 12b).

2. Accessoire fixe selon la revendication 1, **caractérisé en ce que** la partie d'extrémité (9a) du côté opposé à la partie de raccordement de bride (G) de la partie de patte (9) a une construction à extrémité fermée afin de fermer l'ouverture de réception de partie de tige (10).

3. Accessoire fixe selon la revendication 1 ou la revendication 2, **caractérisé en ce que** la partie de patte (9) est construite sous forme de parois extérieures (11) ayant une section en coupe carrée ; la paire de griffes d'enclenchement élastiques (12a, 12b) est disposée sur une paire de portions de paroi extérieure opposées (11a, 11b) ; et la colonne centrale de patte (13) raccorde l'autre paire de portions de paroi extérieure opposées (11c, 11d) l'une à l'autre qui est perpendiculaire à la paire de portions de paroi extérieure opposées (11a, 11b).

4. Accessoire fixe selon l'une quelconque des revendications 1 à 3, **caractérisé en ce que** les ouvertures de réception de partie de tige (10) de la partie de patte (9) comprennent une paire d'espaces divisés en parties par la colonne centrale de patte (13), et les parties de tige (7) de la goupille (2) sont séparées par une bifurcation afin d'être reçues dans les espaces.

5. Accessoire fixe selon l'une quelconque des revendications 1 à 4, **caractérisé en ce que** les griffes d'enclenchement élastiques (12a, 12b) font saillie élastiquement vers l'extérieur depuis les parois extérieures ; lorsqu'elles sont fixées temporairement, les griffes d'enclenchement élastiques (12a, 12b) retournent élastiquement pour faire saillie vers l'extérieur après fléchissement temporaire vers l'intérieur afin de traverser les trous de montage de l'organe d'attache (24) et de l'organe de montage (25) et, lors du verrouillage, elles sont construites de sorte qu'un fléchissement vers l'intérieur soit bloqué par les parties de tige (7) insérées dans les ouvertures de réception de partie de tige (10).

6. Accessoire fixe selon l'une quelconque des revendications 1 à 5, **caractérisé en ce que** la colonne centrale de patte (13), lorsqu'elle est fixée temporairement, est construite de façon à former suffisamment d'espace entre les parois extérieures (11) pour que les griffes élastiques (12a, 12b) fléchissent vers l'intérieur.

7. Accessoire fixe selon l'une quelconque des revendications 3 à 6, **caractérisé en ce que** l'aire en coupe de la partie de patte (9) est amenée à augmenter vers les ouvertures de réception de partie de tige (10) de sorte que les parois intérieures (11) de l'autre paire de portions de paroi extérieure (11c, 11d) s'approchent l'une de l'autre.
